(19) Europäisches Patentamt

European Patent Office

Office européen des brevets

(11) Veröffentlichungsnummer: **0 521 439 A2**

# (12) EUROPÄISCHE PATENTANMELDUNG

(21) Anmeldenummer: **92111006.0**

(51) Int. Cl.5: **G01F 1/80**

(22) Anmeldetag: **29.06.92**

(30) Priorität: **01.07.91 DE 4121732**

(43) Veröffentlichungstag der Anmeldung:
**07.01.93 Patentblatt 93/01**

(84) Benannte Vertragsstaaten:
**BE CH DE FR GB IT LI NL**

(71) Anmelder: **ROTA YOKOGAWA GmbH & Co. KG
Rheinstrasse 8
W-7867 Wehr 2(DE)**

(72) Erfinder: **Ricken, Hans-Martin, Dr.
Sonnhalde 6
W-7880 Bad Säckingen(DE)**

(74) Vertreter: **Heim, Hans-Karl, Dipl.-Ing. et al
Hofbrunnstrasse 36
W-8000 München 71(DE)**

(54) **Messgerät zur Erfassung eines Massendurchflusses nach dem Coriolis-Prinzip.**

(57) Die Erfindung betrifft ein Meßgerät zur Erfassung von Massendurchflüssen nach dem Coriolis-Prinzip. Um eine Verstimmung der zur Ermittlung des Massendurchfluß herangezogenen Meßrohr-Eigenschwingungen zu verhindern, die verursacht ist durch eine Rückführung von Schwingungen, welche in die Einspannstellen des Meßrohres eingeleitet worden sind, ist es erfindungsgemäß vorgesehen, an die Meßrohreinspannung einen Antiresonator anzuschließen, dessen Resonanzspektrum eine vorgegebene Bandbreite aufweist und auf wenigstens eine Eigenschwingung des Meßrohres abgestimmt ist.

Fig. 1

Die Erfindung betrifft ein Massendurchfluß-Meßgerät der im Oberbegriff des Anspruchs 1 angegebenen Art.

Meßgeräte, die den Massendurchfluß nach dem Coriolis-Prinzip erfassen, werden in unterschiedlichen Varianten eingesetzt. Die in Rede stehenden Meßgeräte umfassen zumeist mehrere gerade oder gebogene Rohre, die von dem mit Bezug auf den Durchfluß zu messenden Medium durchsetzt sind, und die durch einen Erreger in ihren Resonanzfrequenzen oder in Eigenschwingungen höherer Ordnung zu Schwingungen angeregt werden. Diese Schwingungen lassen sich als ein Teil einer Kreisbewegung mit Bezug auf eine gemeinsame Achse darstellen. Im Spezialfall von geraden Rohren kann dies als Kreisbewegung bezüglich zweier paralleler Achsen aufgefaßt werden. Das durch die Rohre fließende Medium erzeugt gemäß der Gleichung

$$\vec{F} = 2m \, \vec{v} \times \vec{w}$$

eine Coriolis-Kraft, welche die Rohre zu einer Schwingung um eine Achse anregt, die senkrecht zur jeweiligen Erregungsschwingung verläuft. Im Falle gerader Rohre erzeugt die Coriolis-Kraft Rohrschwingungen parallel zu den beiden Achsen der Erregungsschwingung.

Die Amplitude der von der Coriolis-Kraft angeregten Schwingung ist ein Maß für den jeweiligen Massendurchfluß, und diese Amplitude wird in bekannter Weise erfaßt und in ein Signal umgewandelt, das dem erfaßten Massendurchfluß proportional ist.

Herkömmliche Massendurchfluß-Meßgeräte der in Rede stehenden Art umfassen in der Regel zwei mit Bezug auf ihre Maße identische Rohre, die so angeordnet sind, daß sie gegeneinander schwingen. Dabei ist es erforderlich, das für die Messung vorgesehene Medium durch einen Stromteiler in zwei gleiche Teile aufzuteilen und in die Meßrohre einzuleiten. Anstelle dieser parallelen Beschickung der beiden identischen Meßrohre ist es auch bekannt, die beiden Meßrohre zugunsten eines seriellen Durchflußes aufeinanderfolgend mit dem zu messenden Medium zu beschicken.

Der Aufbau des nach dem Coriolis-Prinzip arbeitenden Massendurchfluß-Meßgerätsmit zwei gegeneinander schwingenden und möglichst identischen Rohren ist begründet durch die damit erzielbare Kräftekompensation in der gemeinsamen Einspannung der Meßrohre. Mit anderen Worten wird hierdurch die Belastung der Einspannung durch die schwingenden Rohre so gering wie möglich gehalten.

In diesem Zusammenhang ist zu bemerken, daß eine Kräftekompensation in der Meßrohreinspannung dann nicht erfolgreich ist, wenn lediglich eines der beiden in dem Massendurchfluß-Meßgerät verwendeten Rohre als Meßrohr ausgelegt ist, also von dem zu messenden Medium durchsetzt ist, weil die Eigenfrequenz des durchflossenen schwingenden Rohres von der Dichte und von der Temperatur des Mediums abhängt, während das nicht von dem zu messenden Medium durchsetzte Rohr stets im wesentlichen mit derselben Eigenfrequenz schwingt.

Das Konstruktionsmerkmal einer Tandem-Rohranordnung bei herkömmlichen Massendurchfluß-Meßgeräten der in Rede stehenden Art ist jedoch mit mehreren Nachteilen verbunden.

Bei einer Parallelbeschickung der beiden Meßrohre ist unumgänglich ein Stromteiler erforderlich, der insofern von Nachteil ist, als er einen nicht unerheblichen Druckverlust erzeugt und zudem schwierig zu reinigen ist. Außerdem ändert sich der Rohrquerschnitt bei der Aufteilung im Stromteiler und gibt Anlaß zu Versperrungen bei größeren Feststoffen im Medium. Bei einer seriellen Beschikkung der beiden Meßrohre ist es nachteilig, daß die Rohre eine relativ komplizierte geometrische Form aufweisen müssen, da das Medium letztendlich im Kreis geführt wird. Die hierfür benötigten Rohrformen erzeugen aufgrund ihrer Konfiguration einen erheblichen Druckverlust. Außerdem ist diese Rohrkonstruktion mit einem hohen Fertigungsaufwand verbunden. Schließlich erfordern beide genannten Rohranordnungen (parallel und seriell) eine hohe Präzision bei der Fertigung, weil die Rohre möglichst identisch gestaltet sein müssen.

Die Aufgabe der vorliegenden Erfindung besteht darin, ein Massendurchfluß-Meßgerät der in Rede stehenden Art zu schaffen, das bei relativ einfachem Aufbau eine hochpräzise Massendurchfluß-Erfassung nach dem Coriolis-Prinzip gewährleistet.

Gelöst wird diese Aufgabe durch die kennzeichnenden Merkmale des Anspruchs 1. Vorteilhafte Weiterbildungen der Erfindung sind in den Unteransprüchen angegeben.

Der Erfindung liegt die Erkenntnis zugrunde, daß die in die Einspannstelle eines Meßrohrs eingeleiteten, nicht kompensierten, von der Eigenschwingung des Meßrohrs herrührenden Schwingungskräfte am wirkungsvollsten ausgeglichen werden können durch einen nicht von dem strömenden Medium durchsetzten Antiresonator, der an die Meßrohreinspannung angeschlossen ist und der durch ein breitbandiges Resonanzspektrum gekennzeichnet ist, das auf die Eigenschwingung des Meßrohrs derart abgestimmt ist, daß wenigstens eine Resonanzfrequenz des Meßrohrs im Antiresonator-Resonanzspektrum zu liegen kommt. Durch die relative Breitbandigkeit des Antiresonator-Resonanzspektrums ist dessen Wirksamkeit unter allen Betriebsbedingungen gewährleistet, und zwar unabhängig von der Umgebungstemperatur sowie unabhängig von der Temperatur des das Meßrohr durchsetzenden Mediums. Ein weiterer Vorteil der Erfindung besteht darin, daß die Fertigung des Meßrohrs ebenso wie die Fertigung des Antiresonators aufgrund der Breitbandigkeit des Antiresonator-Resonanzspektrums nicht mit der bisher benötigten hohen Präzision erfolgen muß, da Fertigungstoleranzen durch die Bandbreite des Antiresonator-Resonanzspektrums ausgeglichen werden.

Eine vorteilhafte Weiterbildung der Erfindung sieht es vor, den Antiresonator aus einer Mehrzahl von Schwingkörpern aufzubauen. Wird bei dieser Ausführungsform des Antiresonators das von dem zu messenden Medium durchsetzte Meßrohr zu Resonanzschwingungen erregt, so wird ähnlich wie bei einer Stimmgabel derjenige Gegenschwingkörper zum Mitschwingen erregt, der genau die gleiche Resonanzfrequenz aufweist. Die Amplitude dieses Gegenschwingkörpers stellt sich so ein, daß die Kräfte in einem Punkt oder auf einer Achse kompensiert werden. Liegt hingegen die Frequenz des Meßrohrs genau zwischen zwei Resonanzfrequenzen von zwei Gegenschwingkörpern, so schwingen beide mit der halben Amplitude. Die Vorteile der Erfindung lassen sich anhand dieses Ausführungsbeispiels des Antiresonators mit mehreren bei unterschiedlichen Resonanzfrequenzen erregten oder paarweise bei unterschiedlichen Resonanzfrequenzen erregten Gegenschwingkörpern besonders anschaulich verdeutlichen.

Ändert sich nämlich aufgrund von Dichteänderungen des zu messenden Mediums oder aufgrund von Temperaturänderungen des Mediums oder der Umgebung die Resonanzfrequenz des Meßrohrs, so werden aufgrund der breitbandigen Auslegung des Antiresonators entsprechende andere Gegenschwingkörper erregt als diejenigen, die bei einer vorgegebenen Temperatur Schwingbewegungen der Meßrohreinspannung kompensieren. Die Kräftekompensation in der Meßrohreinspannung ist dabei solange gewährleistet, wie sich die Resonanzfrequenz nicht aus dem von den Gegenschwingkörpern überstrichenen Frequenzbereich hinausbewegt. Der Frequenzbereich bzw. die Bandbreite des Antiresonator-Resonanzspektrums definiert somit den Temperatur- und Dichtebereich, in dem das Meßgerät ohne nennenswerte Dämpfung seiner Eigenschwingungen betrieben werden kann, aus denen bestimmungsgemäß nach dem Coriolis-Prinzip die Durchflußmengen bestimmt werden.

Unterschiedliche Resonanzfrequenzen für die jeweiligen Schwingkörper des Antiresonators lassen sich in nahezu beliebiger Weise realisieren, und zwar beispielsweise durch entsprechende Materialwahl, durch die Wahl geeigneter Formen oder durch die Wahl geeigneter Anordnungen der Gegenschwingkörper zueinander oder durch die Gestalt der Schwingkörper oder durch eine Kombination der genannten Maßnahmen. Vorzugsweise sind die Schwingkörper derart konfiguriert oder angeordnet, daß sie zu Drehschwingungen anregbar sind. Diese Schwingungsart zeichnet sich dadurch aus, daß sie am effektivsten die Eigenschwingungen des Meßrohres zu kompensieren vermögen, da es sich bei diesen ebenfalls um Drehschwingungen handelt, zumindest soweit die Schwingungen zur Durchflußerfassung nach dem Coriolis-Prinzip verwendet werden.

Bevorzugt ist eine symmetrische Anordnung der Schwingkörper auf dem Gegen- oder Antiresonator, wobei vorzugsweise die dominierende Resonanzschwingung des Meßrohrs in das Symmetrie-Zentrum der Schwingkörperanordnung gelegt ist.

Das heißt, daß der oder die Schwingkörper, die im Symmetrie-Zentrum oder nahe zu diesem zu liegen kommen, vorzugsweise mit der Resonanzfrequenz des Meßrohrs zu schwingen vermögen.

Besonders bevorzugte Gestalten für die Schwingkörper des Antiresonators sind Rohre, Stäbe oder Zungen. Die Schwingkörper sind bevorzugterweise aus Metall gefertigt. Die Schwingkörper des Antiresonators sind jedoch nicht auf derartige geradlinige Konfigurationen beschränkt. Vielmehr können auch spiralförmige Rohre oder Stäbe zum Einsatz kommen, falls spezielle Einsatzsituationen dies erfordern.

Im Hinblick auf das von den Schwingkörpern zu überstreichende Resonanzspektrum ist eine Auslegung der Schwingkörper mit verschiedenen Längen, unterschiedlichen Massen und/oder unterschiedlichen Schwächungen denkbar.

Vorteilhafterweise stimmen die Drehschwingungsachse von Meßrohr und die diskreten Drehschwingungsachsen des Antiresonators miteinander überein.

Eine bevorzugte Ausführungsform des erfindungsgemäßen Massendurchfluß-Meßgeräts sieht ein U-förmiges Meßrohr vor, dessen Schenkel endseitig eingespannt sind. Vorzugsweise ist eine gemeinsame Einspannstelle des U-förmigen Meßrohrs vorgesehen, und zwar bevorzugt in Gestalt eines senkrecht zu den U-Schenkeln des Meßrohrs verlaufenden Stabs oder Rohres, wobei der Stab oder das Rohr die Drehschwingachse des U-förmigen Meßrohrs bildet.

Bei einem derartigen U-förmigen, an einem Stab eingespannten Meßrohr sind die Antiresonator-Schwingkörper vorzugsweise in dem Einspannungsstab bzw. -rohr angeordnet. Weiterhin verlaufen die Gegen-Schwingkörper vorzugsweise in der von dem U-förmigen Meßrohr festgelegten Ebene und sind stab- oder rohrförmig ausgebildet.

Bevorzugt ist eine symmetrische Anordnung dieser mit einem Ende an dem Verspannungsrohr festgelegten Gegen-Schwingkörper, und zwar symmetrisch zu der Mittelachse des U-förmigen Meßrohrs, wobei dies vorzugsweise im Bogen des U-förmigen Meßrohres oder entgegengesetzt dazu, aber auch unter einem Winkel dazu erfolgen kann.

Eine weitere vorteilhafte Ausbildung des erfindungsgemäßen Massendurchfluß-Meßgeräts sieht ein gerade verlaufendes, endseitig jeweils eingespanntes Meßrohr vor und die als Antiresonator vorgesehenen stab- oder rohrförmigen Schwingkörper sind an den beiden Einspannungsstellen festgelegt und erstrecken sich mit ihren freien Enden aufeinander zu.

Der erfindungsgemäße Gedanke ist auch anwendbar auf Rohrformen, bei denen das Meßrohr nicht in einer Ebene gebogen ist, sondern eine räumliche Ausdehnung, z.B. eine Spiralform, besitzt.

Nachfolgend soll die Erfindung anhand der Zeichnung näher erläutert werden; in dieser zeigen:

Fig. 1  eine erste Ausführungsform des erfindungsgemäßen Massendurchfluß-Meßgeräts mit einem U-förmigen Meßrohr und

Fig. 2  eine zweite Ausführungsform des erfindungsgemäßen Massendurchfluß-Meßgeräts mit einem gerade verlaufenden Meßrohr.

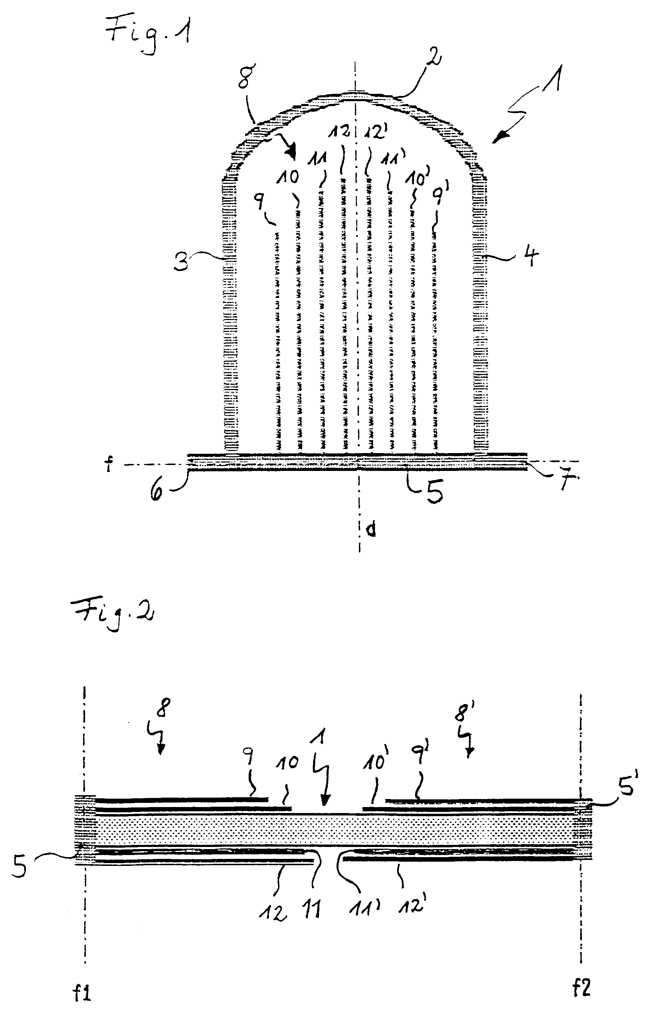

Das in Fig. 1 gezeigte Massendurchfluß-Meßgerät umfaßt ein U-förmig gebogenes Meßrohr 1 mit einer gebogenen Basis 2 und zwei sich an die Basis anschließenden geradlinig verlaufenden Schenkeln 3 und 4. Das Meßrohr 1 ist mit seinen Schenkelenden an einer starren Stange 5 eingespannt, die senkrecht zu den beiden Rohrschenkeln 3 und 4 verläuft. Außerdem ist ein rohrförmiger Einlaß 6 und ein rohrförmiger Auslaß 7 vorgesehen, und diese Rohrteile 6 und 7 erstrecken sich in Verlängerung der Stange 5 lotrecht zu den Meßrohrschenkeln 3 und 4, mit welchen sie in Durchlaß-Übertragungsverbindung stehen.

Sobald ein Medium am Einlaß 6 eingespeist wird, durchströmt es den Meßrohrschenkel 3, die Meßrohrbasis 2 und den Meßrohrschenkel 4 und tritt am Auslaß 7 aus. Durch die Strömung des Mediums wird das Meßrohr 1 mit Bezug auf die Einspannung 5 zu Schwingungen angeregt, wobei die Schwingungsachse F (Drehschwingung) in Richtung der Einspannung 5 verläuft.

Die Basis des Meßrohrs 1 schwingt im wesentlichen senkrecht zur Zeichnungsebene, und die Eigenschwingungen des Meßrohrs 1 werden in die Einspannungsstange 5 eingeleitet. Aufgrund der eingeleiteten Schwingungskräfte führt die Stange 5 Bewegungen aus und überträgt diese spezifischen Schwingungen an die Einlaß- und Auslaßrohre 6 und 7 sowie an das Meßrohr 1, wodurch dessen Eigenschwingungen verstimmt werden. Da die Eigenschwingungen des Meßrohrs 1 bestimmungsgemäß zur Ermittlung des Massendurchsatzes nach dem Coriolis-Prinzip verwendet werden, wobei die Amplitude der Eigenschwingungen des Meßrohrs 1 in nicht dargestellter Weise abgegriffen und ausgewertet werden, führt die Verstimmung der Meßrohr-Eigenschwingungen zu einer Verfälschung der Massendurchfluß-Meßwerte.

Um eine Verfälschung der Meßwerte zu vermeiden, ist es vorgesehen, an die Einspannung 5 einen Antiresonator 8 anzuschließen. Der Antiresonator 8 umfaßt im dargestellten Ausführungsbeispiel acht unterschiedlich lange Schwingkörper in Gestalt von Metallstäben 9 bis 12 und 9' bis 12'. Die Stäbe sind geradlinig ausgebildet und verlaufen in der von dem U-förmigen Meßrohr 1 festgelegten Ebene und liegen darüber hinaus in dem von dem U-förmigen Meßrohr 1 und der Stange 5 umschlossenen Raum. Das heißt, die Antiresonator-Stäbe erstrecken sich mit ihren freien Enden zur Basis 2 des Meßrohrs 1 hin.

Die Antiresonator-Stäbe sind symmetrisch zueinander angeordnet mit Bezug auf eine Achse d, die identisch ist mit der Mittelachse des U-förmigen Meßrohrs 1. Die symmetrische Anordnung der Stäbe ist dabei so getroffen, daß die Länge der Stäbe von außen zur Symmetrieachse d hin zunimmt, wobei jeweils gleich lange Antiresonator-Stäbe derselben Länge im selben Abstand an der Stelle auf der Verspannungsstange 5 angeordnet sind, die von der Mittelachse d durchsetzt ist. Gleich lange Antiresonatorstäbe weisen dieselbe Resonanzfrequenz auf, was im vorliegenden Falle dadurch gewährleistet ist, daß diese Stäbe aus demselben Material bestehen und dieselbe Dicke aufweisen. Antiresonatorstäbe mit identischer Resonanzfrequenz sind also folgende Stabpaare: 9,9'; 10,10'; 11,11' und 12, 12'.

Die Antiresonatorstäbe decken durch ihre Resonanzfrequenzen ein breitbandiges Frequenzspektrum ab, wobei die beiden unmittelbar benachbart zu der Mittelachse d angeordneten, Antischwingkörper bildende Stäbe 12 und 12' mit Bezug auf ihre Resonanzfrequenz am nächsten zu der Resonanzfrequenz des U-förmigen Meßrohrs 1 gelegen sind.

Die stabförmigen Schwingkörper 9 bis 12 und 9' bis 12' kompensieren in die Verspannungsstange 5 eingeleitete Meßrohrschwingungen, wobei aufgrund der Bandbreite des Antischwingungssystems 8 nicht nur die reine Resonanzschwingung des U-förmigen Meßrohrs 1 bei einer vorgegebenen Temperatur kompensiert wird, sondern auch "verstimmte" Schwingungen des Meßrohrs 1, wobei die Verstimmung verursacht sein kann durch unterschiedliche Umgebungstemperaturen, unterschiedliche Temperaturen des das Meßrohr 1 durchsetzenden Mediums sowie durch unterschiedliche Drücke des Mediums.

Eine abgewandelte Ausführungsform des vorstehend beschriebenen Massendurchfluß-Meßgeräts ist in Fig. 2 dargestellt. Demnach ist das Meßrohr 1 als gerades Rohr ausgebildet, welches in der von dem das Rohr durchsetzenden Medium erzeugten Grundschwingung aus der Papierebene heraus und in diese hineinschwingt, da es endseitig in Lagern 5 und 5' eingespannt ist, durch welche die Drehschwingachsen f1 und f2 des Rohres 1 hindurch verlaufen, und zwar lotrecht zu der Längsmittelachse des Rohres 1. Die Einspannstellen 5 und 5' sind wie bei dem System gemäß der Fig. 1 mit Antiresonatorstäben versehen, wobei an jede Einspannstelle 5 bzw. 5' vier Stäbe 9 bis 12 bzw. 9' bis 12' angekoppelt sind. Die Antiresonatorstäbe verlaufen parallel zu dem Meßrohr 1 und es liegen jeweils gleich lange Stäbe stirnseitig einander gegenüber, wie beispielsweise die Stäbe 9 und 9'. Die Antiresonatorstäbe sind symmetrisch zu einer nicht dargestellten Achse angeordnet, die parallel zu den beiden Schwingachsen f1 und f2 verläuft und das Meßrohr 1 auf halber Länge durchsetzt.

**Patentansprüche**

1. Massendurchfluß-Meßgerät mit wenigstens einem, von dem zu messenden Medium durchflossenen und an wenigstens einer Stelle eingespannten Meßrohr, das mittels eines Erregers zu Eigenschwingungen angeregt wird und das von der Coriolis-Kraft des strömenden Mediums zu Schwingungen gezwungen wird, aus denen, insbesondere aus deren Amplitude, der Massendurchfluß abgeleitet wird,
**gekennzeichnet** durch
einen an die Meßrohr-Einspannung (5,5') angeschlossenen Antiresonator (8,8'), mit einem auf wenigstens eine Eigenschwingung des Meßrohres (1) abgestimmten Resonanzspektrum vorgegebener Bandbreite.

2. Meßgerät nach Anspruch 1,
dadurch **gekennzeichnet,**
daß das Zentrum des Resonanzspektrums des Antiresonators (8,8') im wesentlichen mit der Meßrohr-Eigenresonanz zusammenfällt.

3. Meßgerät nach Anspruch 1 oder 2,
dadurch **gekennzeichnet,**
daß der Antiresonator (8,8') eine Mehrzahl von Schwingkörpern (9 bis 12, 9' bis 12') umfaßt.

4. Meßgerät nach Anspruch 3,
dadurch **gekennzeichnet,**
daß die Schwingkörper (9 bis 12; 9' bis 12') unterschiedliche Resonanzfrequenzen aufweisen.

5. Meßgerät nach Anspruch 4,
dadurch **gekennzeichnet,**
daß die Schwingkörper (9 bis 12, 9' bis 12') mit Bezug auf ihre Resonanzfrequenzen in ausgewählten Stellungen mit ausgewählten Abständen zueinander angeordnet sind.

6. Meßgerät nach Anspruch 5,
dadurch **gekennzeichnet,**
daß die Schwingkörper (9 bis 12, 9' bis 12') symmetrisch zueinander angeordnet sind, wobei in dem oder nahe dem Symmetriezentrum Schwingkörper angeordnet sind, deren Resonanzfrequenz mit der Meßrohr-Resonanzfrequenz im wesentlichen übereinstimmen.

7. Meßgerät nach einem der Ansprüche 3 bis 6,
dadurch **gekennzeichnet,**
daß die Schwingkörper (9 bis 12, 9' bis 12') unterschiedliche Massen und/oder Konfigurationen und/oder Abmessungen aufweisen.

8. Meßgerät nach einem der Ansprüche 3 bis 7,
dadurch **gekennzeichnet,**
daß die Schwingkörper (9 bis 12, 9' bis 12') rohr- oder stabförmig ausgebildet sind, und
daß die Rohre oder Stäbe in einer gemeinsamen Ebene angeordnet sind.

9. Meßgerät nach einem der Ansprüche 1 bis 8,
dadurch **gekennzeichnet,**
daß die Drehschwingachse des Meßrohres (1) mit den Drehschwingachsen der Antiresonator-Schwingkörper (9 bis 12, 9' bis 12') übereinstimmt, und
daß das Meßrohr (1) an zwei Stellen eingespannt ist, an welchen die Drehschwingachse bzw. die Drehschwingachsen des Meßrohres (1) verläuft bzw. verlaufen.

10. Meßgerät nach Anspruch 9,
dadurch **gekennzeichnet,**
daß das Meßrohr (1) U-Form aufweist und daß die Schenkel (3,4) des U-förmigen Meßrohres (1) durch einen senkrecht zu diesen verlaufenden Stab bzw. durch ein entsprechend ausgerichtetes Rohr (5) gegeneinander verspannt sind, der bzw. das mit der Drehschwingachse des U-förmigen Meßrohres (1) zusammenfällt.

11. Meßgerät nach einem der Ansprüche 1 bis 10,
dadurch **gekennzeichnet,**
daß die Antiresonator-Schwingkörper (9 bis 12, 9' bis 12') auf dem Einspannungsrohr (5) angeordnet sind, und
daß die Schwingkörper (9 bis 12, 9' bis 12') in der von dem U-förmigen Meßrohr (1) festgelegten Ebene verlaufen.

12. Meßgerät nach Anspruch 11,
dadurch **gekennzeichnet,**
daß die Schwingkörper (9 bis 12, 9' bis 12') Stab- oder Rohrform aufweisen und mit ihren freien Enden zu dem Querschenkel (2) des U-förmigen Meßrohres (1) weisen.

13. Meßgerät nach Anspruch 12,
dadurch **gekennzeichnet,**
daß die Schwingkörper (9 bis 12, 9' bis 12') mit Bezug auf die Symmetrieachse des U-förmigen Meßrohres (1) hinsichtlich ihrer Resonanzfrequenzen symmetrisch zueinander abgestimmt sind, und
daß näher an der Symmetrieachse des U-förmigen Meßrohres gelegene Schwingkörper (12,12') eine niedrigere Resonanzfrequenz aufweisen als weiter von dieser Achse abgelegene Schwingkörper (9 bis 11, 9' bis 11').

14. Meßgerät nach einem der Ansprüche 1 bis 13,
dadurch **gekennzeichnet,**
daß das Meßrohr (1) gerade ausgebildet und endseitig eingespannt ist, und
daß der Antiresonator (8,8') zweiteilig ausgelegt ist, wobei jeweils ein Teil mit einer der beiden Einspannstellen (5,5') verbunden ist.

15. Meßgerät nach Anspruch 14,
dadurch **gekennzeichnet,**
daß der Antiresonator (8 bis 12, 8' bis 12') Rohre oder Stäbe umfaßt, die sich mit ihren freien Enden aufeinander zu erstrecken, und
daß die Rohre oder Stäbe parallel zur Längsachse des Meßrohrs (1) verlaufen.

16. Meßgerät nach Anspruch 15,
dadurch **gekennzeichnet,**
daß diejenigen stab- oder rohrförmigen Schwingkörper (9 bis 12, 9' bis 12') mit denselben Resonanzfrequenzen miteinander fluchtend ausgerichtet sind.

17. Meßgerät nach einem der Ansprüche 1 bis 16,
dadurch **gekennzeichnet,**
daß der Einlaß (6) und der Auslaß (7) des Meßrohres (1) auf der Drehschwingungsachse der Meßrohreinspannung oder der Meßrohreinspannungen liegt oder liegen.

18. Meßgerät nach einem der Ansprüche 1 bis 17,
dadurch **gekennzeichnet,**
daß die Schwingkörper (9 bis 12, 9' bis 12') des Antiresonators (8,8') aus beliebigem Material, insbesondere aus Metall, bestehen, und
daß die Schwingkörper eine einheitliche Körperkonfiguration aufweisen, insbesondere jedoch als flache Metallzungen ausgebildet sind.

Fig. 1

Fig. 2